# FASCICULE DE BREVET EUROPEEN

(11) **EP 1 910 236 B1**
(45) Date de publication et mention de la délivrance du brevet: **19.10.2011**
(21) Numéro de dépôt: 06794482.7
(22) Date de dépôt: 20.07.2006
(51) Int. Cl.: C03B 37/16

(54) **INSTALLATION DE PRISE AUTOMATIQUE DE FILS**
ANLAGE ZUR AUTOMATISCHEN GARNAUFNAHME
INSTALLATION FOR AUTOMATIC YARN TAKE-UP

(30) Priorité: 22.07.2005 FR 0552272
(43) Date de publication de la demande: 16.04.2008
(73) Titulaire: Saint-Gobain Vetrotex France, 73000 Chambéry (FR)
(72) Inventeur: BOISSONNAT, Philippe, F-73190 Challes les Eaux (FR); BOISSET, Jean-Paul, F-73230 Barby (FR); SKURA, Frédéric, F-73420 Drumettaz Clarafond (FR)
(74) Mandataire: Intès, Didier Gérard André
(86) Numéro de dépôt international: PCT/FR2006/050728
(87) Numéro de publication internationale: WO 2007/010168

(56) Documents cités:
- US-A- 5 935 289

## Description

La présente invention est relative à une installation de prise automatique de fils. Elle vise plus précisément encore une installation de prise de fils destinée à être utilisée au sein d'un procédé de coupe sous filière, procédé qui assure à la fois l'étirage et la coupe de brins de fils thermoplastiques, notamment de verre. Selon un autre aspect de l'invention, elle vise également un procédé de coupe directe sous filière équipé de cette installation de prise automatique de fils.

On rappelle que la fabrication de fils de verre de renforcement résulte d'un processus industriel complexe qui consiste à obtenir des fils à partir de filets de verre fondu s'écoulant au travers des orifices de filières. A partir d'au moins une cabine de fibrage, ces filets sont étirés sous forme de filaments continus, puis ces filaments sont rassemblés en fils de base, lesquels fils sont ensuite par exemple coupés en continu de manière à produire une pluralité de brins de fils de verre. Cette phase du processus industriel est communément appelée « la coupe directe sous filière ».

Classiquement une cabine de fibrage consiste essentiellement en une arrivée de verre fondu venant d'un four, ce verre à haute température alimente une pluralité de filières en alliage de platine, lequel verre après passage dans des orifices pratiqués dans la filière et étirage donne naissance à des filaments.

Dans un processus de coupe directe sous filière, les filaments, après avoir reçu un ensimage et avoir été réunis en fils, sont dirigés vers un coupeur qui assure à la fois l'opération d'étirage et l'opération de coupe des fils en brins de fils de verre coupés.

D'une manière classique dans un procédé de coupe sous filière, cette opération est réalisée par un machiniste de filière. Elle intervient, au cours d'un cycle normal de production, de maintes fois, car elle est tributaire de la technologie et du fonctionnement d'un coupeur sous filière.

Celui-ci doit conférer aux fils de verre une vitesse d'étirage constante correspondant précisément au débit de la filière en régime permanent. Or, pour atteindre ce régime permanent, il est nécessaire de passer par une phase transitoire qui consiste essentiellement à une augmentation progressive de la vitesse d'étirage des fils. Cette phase transitoire est également présente après toute rupture inopinée de la production, comme par exemple lors d'une casse des fils. Il est nécessaire de passer par une phase transitoire de relance qui nécessite un étirage à vitesse modérée qui peut être obtenu à la main ou par un tire-fil individuel placé en contre-bas du dispositif d'ensimage de chaque filière.

En principe lorsque le machiniste de filière juge que le régime thermique de la filière est stabilisé, il saisit le fil provenant du tire-fil de cette filière et le dirige vers un organe de relance situé après les organes de coupe, l'organe de relance étant adapté pour faire passer la vitesse d'étirage des fils d'une vitesse de l'ordre de quelques m/s (de 1 à 5 m/s) à quelques dizaines de m/s, qui correspond en fait à la vitesse nominale d'étirage atteinte en régime permanent.

Lorsque cette vitesse nominale est atteinte, les fils sont dirigés au niveau de l'organe coupeur proprement dit, constitué généralement d'une roue enclume et d'une roue à lames, adaptées pour débiter ses brins de fils de verre après passage des fils entre ces dernières.

Or, on comprend que ce mouvement de va et vient entre la filière et la roue de relance du coupeur peut intervenir selon des phases programmées et selon des phases non programmées du cycle de production.

Au titre des phases programmées, il y a celles qui correspondent à des interventions de maintenance qui nécessitent l'interruption de fonctionnement de la machine, changement de l'organe de coupe par exemple.

Au titre des phases non programmées, il s'agit notamment des interventions du machiniste, lorsqu'une casse intervient sur l'un au moins des fils à un endroit quelconque situé entre la sortie de filière et le coupeur proprement dit.

Quelle que soit la nature des phases, les va et vient du machiniste engendrent des déplacements nombreux qui peuvent avoir une durée non négligeable (surtout lorsque plusieurs filières se trouvent en défaut), ceci se concrétise par une perte de produit final (brins de fils coupés) et une production de déchet, et finalement génère une baisse de rendement de l'unité de production.

Une installation de coupe directe sous filière permettant de solutionner en partie ce problème est connue, notamment par le brevet US 5 935 289 ; cette dernière est équipée d'un dispositif mécanisé en forme de navette permettant d'une part, la prise d'au moins une nappe de fils et d'autre part, la dépose de cette dernière au niveau du coupeur sous filière.

L'inconvénient majeur de cette installation réside dans son encombrement important. En effet, le dispositif mécanisé de prise et de dépose de la nappe de fil se déplace sur un châssis qui fait face à l'installation de production en s'étendant depuis l'aplomb des filières jusqu'au coupeur proprement dit. Cette disposition « en rideau » constitue un risque pour les interventions du machiniste de filière, la sécurité de ce dernier peut être mise en défaut par le passage inopiné de la navette.

La présente invention vise donc à pallier ces inconvénients en proposant une installation sécurisée permettant de limiter les va-et-vient de l'opérateur entre la pluralité de cabines de fibrage juxtaposées et le coupeur.

L'installation de prise automatique de fils selon l'invention est définie dans la revendication 1 annexée . Une telle installation est destinée à être mise en oeuvre au sein d'un procédé de coupe sous filière qui consiste à former des brins de fils de verre à partir de verre fondu, ledit verre fondu ayant traversé des orifices pratiqués au sein d'au moins une filière afin de former une pluralité de filaments, lesdits filaments étant réunis en au moins un fil, ledit fil étant dirigé après une opération d'ensimage, vers au moins un coupeur adapté pour couper au moins un fil en une pluralité de brins de fils de verre de longueur désirée et conformant ainsi un trajet entre la filière et le coupeur. Cette installation comporte :
- au moins un organe de préhension pour saisir au moins un fil, ledit organe pouvant occuper une première position dans laquelle il saisit le fil et une seconde position dans laquelle il relâche le fil,
- une boucle de convoyage pour déplacer l'organe de préhension entre une première position dans laquelle ledit organe de préhension peut saisir au moins un fil et une seconde position dans laquelle ledit organe de préhension relâche ledit fil au niveau du coupeur.

Grâce à ces dispositions et notamment à la présence d'une seule boucle de convoyage, il est possible d'automatiser en sécurité le déplacement d'au moins un fil entre une sortie de filière et un coupeur, indépendamment du fonctionnement optimal des autres filières.

Dans des modes de réalisation préférés de l'invention, on peut éventuellement avoir recours en outre à l'une et/ou à l'autre des dispositions suivantes :
- la boucle de convoyage s'étend entre au moins deux poulies de guidage respectivement positionnées de par et d'autre de l'installation à savoir d'une part au droit de l'une des cabines et d'autre part au voisinage du coupeur, et selon une direction au moins en partie sensiblement perpendiculaire à un plan parallèle au trajet du fil,
- la boucle de convoyage est mise en mouvement au niveau de l'une au moins des poulies, à l'aide d'un actionneur adapté pour imprimer à ladite boucle un mouvement permanent à vitesse contrôlée,
- la poulie motorisée est située au voisinage de l'aplomb de l'une au moins des filières,
- l'installation comporte en outre au moins un organe de commande adapté pour modifier l'état dudit organe de préhension entre la première et la deuxième position,
- l'organe de commande comporte au moins une came mobile actionnée par un levier, ladite came étant positionnée au droit de la nappe de fils, ladite came étant munie d'une surface de guidage avec un organe de manoeuvre solidaire dudit organe de préhension,
- l'organe de préhension peut être débrayable par rapport à la boucle de convoyage,
- au moins une partie de la boucle de convoyage est solidaire d'une structure articulée sur le coupeur, ladite structure étant protégée par au moins un capot.

Selon un autre aspect de l'invention, celle-ci vise également un procédé de coupe sous filière tel que défini dans la revendication 9 annexée. Un tel procédé consiste à former des brins de fils de verre à partir de verre fondu, ledit verre fondu ayant traversé des orifices pratiqués au sein d'au moins une filière afin de former une pluralité de filaments, lesdits filaments étant réunis en au moins un fil, ledit fil étant dirigé après une opération d'ensimage, vers au moins un coupeur adapté pour couper au moins un fil en une pluralité de brins de fils de verre de longueur désirée et conformant ainsi un trajet entre la filière et le coupeur, Dans ce pocédé :
- au moins un organe de préhension saisit au moins un fil, ledit organe pouvant occuper une première position dans laquelle il saisit le fil et une seconde position dans laquelle il relâche le fil,
- une boucle de convoyage (1) déplace l'organe de préhension entre une première position dans laquelle ledit organe de préhension saisit au moins un fil et une seconde position dans laquelle ledit organe de préhension relâche ledit fil au niveau du coupeur.

D'autres caractéristiques et avantages de l'invention apparaîtront au cours de la description suivante d'une de ses formes de réalisation, donnée à titre d'exemple non limitatif, en regard des dessins joints.

Sur les dessins :
- La figure 1 est une vue en perspective et à grande échelle du coupeur équipé de la boucle de convoyage représentée à l'une de ses extrémités ;
- La figure 2 est une vue en détail de l'autre extrémité de la boucle de convoyage visible en figure 1 ;
- La figure 3 est une vue en détail de la boucle de convoyage visible en figure 2, pourvue de son organe de préhension selon une première variante de réalisation ;
- La figure 4 est une vue en perspective et à grande échelle de l'organe de préhension représentée en figure 3 ;
- La figure 5 est une vue en perspective et en détail de l'installation faisant apparaître les capots de protection .
- Les figures 6 et 7 sont des vues de dessus d'une deuxième variante de réalisation de l'organe de préhension, la pince étant représentée en position ouverte et fermée.

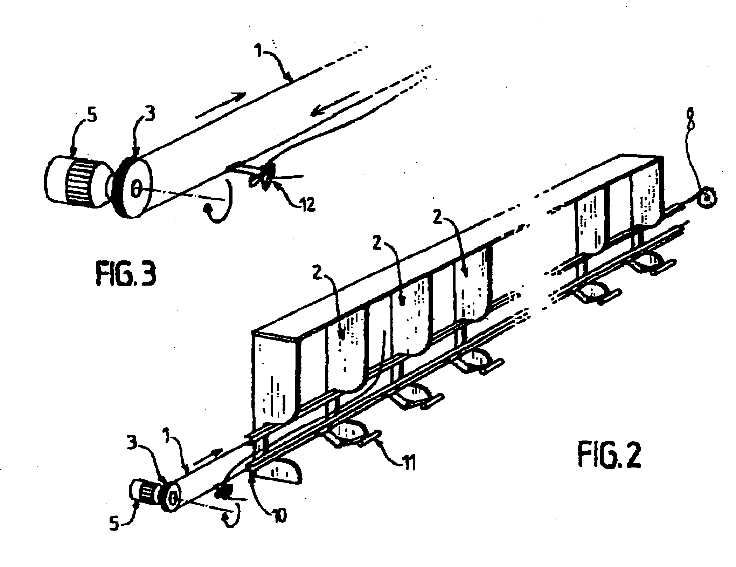

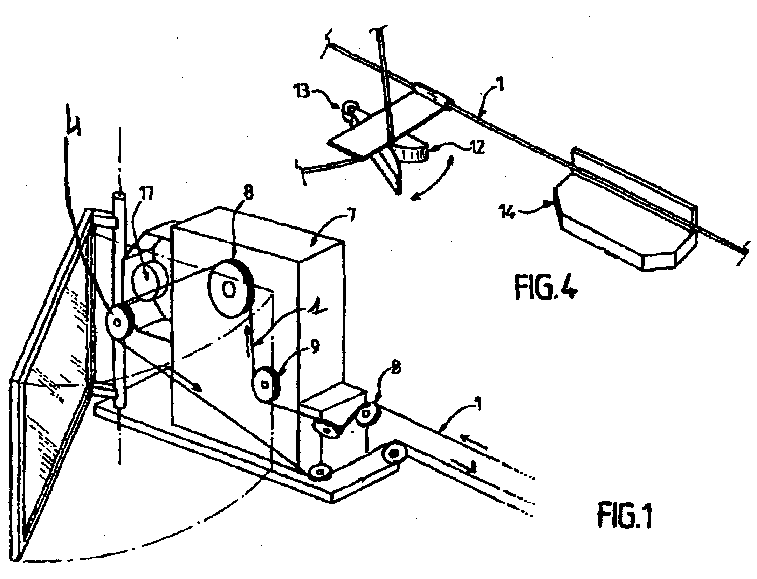

On a représenté très schématiquement en figures 1 et 2 une unité de production permettant la mise en oeuvre d'un procédé dit « de coupe directe sous filière ». Ce procédé est bien connu de l'homme du métier et à fait l'objet de nombreuses publications, notamment EP 0 849 381 B1, et nous ne décrirons pas plus en détail son fonctionnement.

Globalement, cette unité de production comporte une batterie de filières juxtaposées 2, chacune de ces filières étant susceptible de produire des brins de fils de verre à partir de verre fondu, ledit verre fondu ayant traversé des orifices pratiqués au sein de l'une au moins de ces filières afin de former une pluralité de filaments après étirage, lesdits filaments étant réunis en au moins un fil, ledit fil étant dirigé-après une opération d'ensimage, vers au moins un coupeur, également représenté sur cette figure, adapté pour couper au moins un fil formé par la réunion des filaments en une pluralité de brins de fils de verre de longueur désirée.

Comme cela apparaît en détail en figure 2, une boucle de convoyage 1 est positionnée à l'aplomb des filières 2 et selon un plan sensiblement parallèle à la sortie des filaments provenant de chacune des filières. Cette boucle de convoyage 1 est établie entre au moins deux poulies 3, 4 (visibles respectivement en figures 3 et 1) dont l'une au moins est motorisée par un actionneur 5, chacune des poulies étant positionnée respectivement à de par et d'autre d'une extrémité de la batterie de filières 2 et d'un coupeur 7.

L'actionneur 5 de type moteur hydraulique ou électrique, permet, par le biais d'un réducteur, d'imprimer un mouvement permanent et à vitesse contrôlée à la boucle de convoyage 1 qui présente un profil sensiblement linéaire au moins dans une zone au voisinage des filières 2.

Comme on peut le voir au niveau de la figure 1 en détail, cette boucle de convoyage 1 s'étend sensiblement dans un plan parallèle à la façade du coupeur 7. Cette boucle de convoyage 1 présente un profil sinueux de manière à épouser au plus prêt la façade du coupeur 7, ce profil sinueux étant obtenu par le positionnement à des endroits adéquats d'une pluralité de poulies 8, 9 d'entraînement et de guidage, formant pour certaines, un renvoi d'angle.

La boucle de convoyage 1 visible en figures 3 et 4, est réalisée à l'aide d'un câble métallique, d'une courroie lisse ou crantée, d'une chaîne, d'un vérin, de tout autre dispositif permettant de réaliser une cinématique équivalente, c'est-à-dire assurer le déplacement sans glissement entre deux points, d'un organe supporté par ladite boucle.

Dans l'exemple non limitatif représenté en figure 3, la boucle de convoyage est réalisée à partir d'un câble métallique, notamment en acier, tendu entre deux poulies, dont l'une au moins est motorisée, le profil de la gorge de poulie étant adapté pour limiter, voire supprimer tout glissement avec la surface périphérique du câble (un profil sensiblement conique de cette gorge est particulièrement bien adapté).

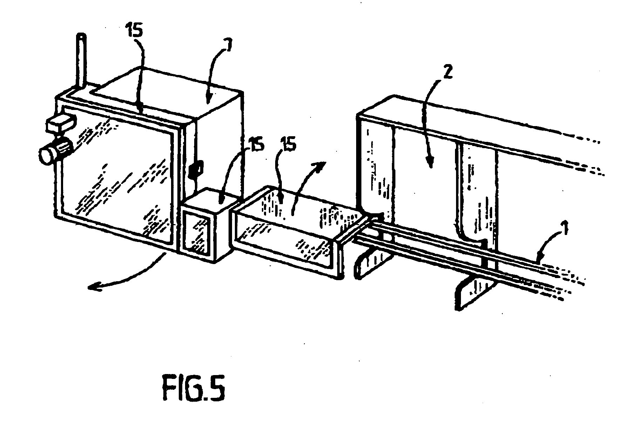

Sur la figure 5, on a représenté à une plus grande échelle la façade de filières juxtaposées visibles en figure 1. La boucle de convoyage 1 est protégée et guidée à l'intérieur de profilé métallique de section droite transversale en U, ces profilés prenant place au sein d'un embrasement réalisé en partie basse des filières de manière à ne pas gêner le passage des filaments en verre.

Au niveau de chaque puits de filière est positionné un organe de manoeuvre 11 conformé en pédale ou levier (visible en figure 2), celui-ci permet de manoeuvrer une came entre une première position dans laquelle un organe de préhension 12 coopérant avec la boucle de convoyage 1 peut saisir au moins un fil de verre et une seconde position dans laquelle ce même organe de préhension en passant au voisinage du fil ne peut le saisir comme cela apparaîtra en plus en détail en figure 4.

En figure 4, on a représenté en détail l'organe de préhension 12 selon une première variante de réalisation. En forme de pince et disposant de mâchoires à profil incurvé afin d'améliorer le guidage des fils, cet organe de préhension 12 coopère avec la boucle de convoyage 1 soit de manière permanente (sertissage, pinçage), soit de manière non permanente et dans ce cas, il est débrayable. La pince est pourvue d'un talon supportant un galet 13 qui permet d'ouvrir ou de fermer les mâchoires de ladite pince.

Ce mouvement d'ouverture ou de fermeture des mâchoires est provoqué par le passage du galet 13 sur des surfaces de guidage réalisée sur le chant de ladite came 14 selon la cinématique suivante :
- lorsque le galet 13 est en contact de la surface de guidage inclinée, il y a ouverture des mâchoires,
- lorsque qu'il n'y a plus contact entre le galet 13 et la surface de guidage de la came 14 qui est parallèle à la boucle de convoyage, il y a fermeture des mâchoires autour du fil et entraînement de ce dernier du fait du mouvement de translation de la boucle de convoyage 1 supportant l'organe de préhension 12.

Cette situation n'est réalisée que lorsque la came 14 est amenée en position suite à l'action du machiniste de filière sur le levier 11 (comme cela a été expliqué précédemment).

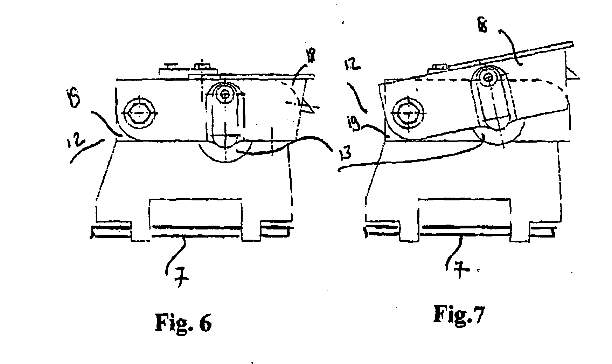

Selon un autre mode de réalisation de l'organe de préhension 12 représenté en figures 6 et 7, celui-ci se présente sous la forme d'une pince. L'ouverture de la pince (cf. figure 7) est obtenue par l'abaissement d'une came. Cet abaissement est géré par le machiniste de filière qui après préparation de sa filière (mise au tire-fil d'une mèche de fils, et régime thermique établi), considère que la mèche en question peut être saisie par l'organe de préhension 12. Il appuie par exemple sur un contacteur positionné notamment en façade de la filière en question, provoquant l'abaissement de la came qui va interférer avec le trajet de l'organe de préhension 12.

Comme on peut le voir sur les figures 6 et 7, la pince comporte une partie fixe 19 et une partie mobile 18 articulée sur la précédente. La partie mobile 18 dispose d'un galet 13 qui va croiser la cinématique de la came. Au contact de cette dernière, l'ouverture de la pince est réalisée et l'organe de préhension 12 solidaire de la boucle de convoyage 7 va saisir la mèche (le fil). Puis sous l'effet d'un organe élastique (du type ressort ou similaire), la pince se referme en enserrant la mèche ; la boucle de convoyage 7 transporte alors la mèche au niveau de la roue de relance du coupeur 17 (visible en figure 1), la mèche est libérée. La boucle de convoyage achemine l'organe de préhension 12 dans une position d'attente dans laquelle la pince est nettoyée par un jet d'eau par exemple et attend une autre sollicitation du machiniste pour une autre filière à relancer.

Il est important de noter que cette opération de relance automatique d'une filière est réalisée indépendamment du fonctionnement nominal des autres filières contiguës. Cette opération de relance n'interfère pas et n'entrave pas le régime de production de l'installation.

La figure 1 montre également le cheminement de la boucle de convoyage 1 au niveau de la façade du coupeur 7 sous filière. Ce cheminement peut être plus sinueux que celui réalisé par la première boucle de convoyage afin de mieux épouser le gabarit du coupeur. Grâce au positionnement adéquat des poulies de renvoi et de guidage 8, 9, il est possible d'intégrer cette boucle de convoyage au niveau d'une installation de production existante. On remarque en outre que cette boucle de convoyage 1 (dans sa zone située au plus proche du coupeur) est protégée par une pluralité de capots 15 articulés sur le châssis du coupeur (se reporter en figure 5).

Selon un mode préféré, la boucle de convoyage 1 est solidaire d'un châssis articulé par rapport au bâti du coupeur 7. Cela permet d'utiliser le coupeur de manière traditionnel, c'est-à-dire sans le recours à la boucle de convoyage 1.

L'organe de préhension 12, grâce à la boucle de convoyage, fait cheminer la nappe de fils jusqu'à une roue de relance 17 du coupeur 7.

On rappelle que la roue de relance est l'organe qui permet d'étirer les fils pendant des phases transitoires de fonctionnement du coupeur.

En effet, lorsqu'il est nécessaire de procéder à une phase de maintenance sur le coupeur (traditionnellement un changement des organes de coupe), ou lorsque un fil s'est brisé suite à un dysfonctionnement de la filière, il convient d'évacuer les fils en continuant de les étirer. La roue de relance participe à ce processus durant ces phases transitoires en enroulant sur elle-même le fil.

La roue de relance 17, représentée en figure 1, est donc pourvue d'un dispositif de préhension automatique du fil véhiculé par la boucle de convoyage 1 au niveau de l'organe de préhension 12.

La roue de relance est positionnée de telle sorte que le dispositif de préhension intercepte la trajectoire de l'organe de préhension 12.

Dans l'exemple de réalisation, la roue de relance est munie d'une saignée. Cette saignée, lorsqu'elle croise la trajectoire du fil et sous l'effet d'un mouvement de rotation, engrène le fil et l'enroule le fil sur la surface périphérique de la roue de relance.

Dans l'éventualité où l'organe de préhension n'aurait pas une pince à mâchoires pilotées, il convient alors de positionner un couteau ou tout autre organe similaire de manière à ce qu'il puisse libérer le fil de l'organe de préhension 12 avant que la roue de relance soit animée d'un mouvement de rotation.

L'invention telle que précédemment décrite offre de multiples avantages :
- La boucle de convoyage avec son organe de préhension sont positionnés dans des zones de l'unité de production qui sont protégées, garantissant ainsi la sécurité des utilisateurs ; particulièrement, ils sont disposés sensiblement en dessous du niveau du plancher sur lequel chemine les utilisateurs empêchant à ces derniers, au niveau de leurs pieds, de rencontrer les organes en mouvement, pour ainsi une meilleure sécurité.
- cette installation de prise automatique des fils n'est pas encombrante et est compatible avec un fonctionnement manuel de l'installation de coupe directe sous filière, le machiniste de filière peut, en cas de problème, alimenter manuellement le coupeur,
- elle n'entrave pas le fonctionnement des autres filières.

## Revendications

1. Système de fabrication de brins de fils de verre, comprenant :
au moins une filière (2) destinée à former par étirage une pluralité de filaments à partir de verre fondu ;
un moyen pour réunir les filaments en au moins un fil ;
un dispositif pour déposer un ensimage sur ledit au moins un fil ;
au moins un coupeur (7) adapté pour couper ledit au moins un fil en une pluralité de brins de fils de verre ; et
une installation de prise automatique de fils pour diriger ledit au moins un fil vers ledit au moins un coupeur (7), ladite installation de prise automatique de fils comprenant au moins un organe de préhension (12) pour saisir ledit au moins un fil, ledit organe (12) pouvant occuper une première position dans laquelle il saisit ledit au moins un fil et une seconde position dans laquelle il relâche ledit au moins un fil au niveau du coupeur (7) ;
le système étant **caractérisé en ce que** ladite installation comprend, en outre, une boucle de convoyage (1) pour déplacer ledit organe de préhension (12) entre ladite première position et ladite seconde position, ladite boucle de convoyage ayant une partie positionnée à l'aplomb de ladite au moins une filière et selon un plan sensiblement parallèle à la sortie des filaments provenant de ladite au moins une filière.

2. Système selon la revendication 1, comprenant une batterie de filières juxtaposées (2), dans lequel la boucle de convoyage (1) s'étend entre deux poulies (3, 4) d'entraînement respectivement positionnées de part et d'autre de ladite installation de prise automatique de fils, à savoir respectivement de part et d'autre d'une extrémité de la batterie de filières (2) et du coupeur (7), et selon une direction au moins en partie sensiblement perpendiculaire à un plan parallèle au trajet dudit fil.

3. Système selon la revendication 1 ou 2, **caractérisé en ce que** la boucle de convoyage (1) est mise en mouvement, au niveau de l'une desdites deux poulies (3), à l'aide d'un actionneur (5) adapté pour imprimer à ladite boucle de convoyage (1) un mouvement permanent à vitesse contrôlée.

4. Système selon la revendication 3, **caractérisé en ce que** la poulie (3) motorisée est située au voisinage de l'aplomb de l'une quelconques des filières (2).

5. Système selon la revendication 1, **caractérisé en ce qu'**il comporte en outre au moins un organe de commande adapté pour modifier l'état dudit organe de préhension (12) entre la première position et la deuxième position.

6. Système selon la revendication 5, **caractérisé en ce que** l'organe de commande comporte au moins une came (14) mobile actionnée par un levier (11), ladite came (14) étant positionnée au droit dudit fil, ladite came étant munie d'une surface de guidage avec un organe de manoeuvre solidaire dudit organe de préhension (12).

7. Système selon la revendication 1 ou 2, **caractérisé en ce que** l'organe de préhension (12) est débrayable par rapport à la boucle de convoyage (1).

8. Système selon l'une des revendications 1 à 7, **caractérisé en ce qu'**au moins une partie de la boucle de convoyage (1) est solidaire d'une structure articulée sur le coupeur (7), ladite structure étant protégée par au moins un capot (15).

9. Procédé de coupe sous filière qui consiste à former des brins de fils de verre à partir de verre fondu, ledit verre fondu ayant traversé des orifices pratiqués au sein d'au moins une filière afin de former une pluralité de filaments, lesdits filaments étant réunis en au moins un fil, ledit au moins un fil étant étiré et dirigé après une opération d'ensimage vers au moins un coupeur (7) adapté pour couper ledit au moins un fil en une pluralité de brins de fils de verre de longueur désirée en conformant ainsi un trajet entre la filière et le coupeur,
dans lequel au moins un organe de préhension saisit (12) au moins un fil, ledit organe (12) pouvant occuper une première position dans laquelle il saisit ledit fil et une seconde position dans laquelle il relâche ledit fil au niveau du coupeur,
le procédé étant **caractérisé en ce qu'**une boucle de convoyage (1) déplace l'organe de préhension (12) entre ladite première position et ladite seconde position, ladite boucle de convoyage ayant une partie positionnée à l'aplomb de ladite au moins une filière et selon un plan sensiblement parallèle à la sortie des filaments provenant de ladite au moins une filière.

10. Procédé selon la revendication 9, **caractérisé en ce que** ledit organe de préhension (12) saisit au moins un fil au niveau d'au moins une filière indépendamment du fonctionnement des autres filières.

## Claims

1. A system for producing chopped glass strands, comprising :
at least one bushings (2) for producing by drawing a plurality of filaments from molten glass;
means for combining the filaments into at least one strand,
means for applying a sizing composition to said at least one strand;
at least one chopper (7) adapted to chop said at least one strand into a plurality of chopped glass strands; and
an automatic strand take-up installation for directing said at least one strand towards said at least one chopper (7), said automatic strand take-up installation comprising at least one gripping member (12) for taking hold of said at least one strand, said member (12) being able to occupy a first position in which it takes hold of the strand and a second position in which it releases the strand at the chopper (7);
the system being **characterized in that** said installation further comprises a conveying loop (1) for moving the gripping member (12) between the first position and the second position, a part of said conveying loop (1) being positioned directly below the at least one bushings (2) and in a plane approximately parallel to the output of filaments coming from the at least one bushings (2).

2. The system of claim 1, comprising a battery of juxtaposed bushings (2), wherein the conveying loop (1) extends between two drive pulleys (3, 4) positioned respectively on either side of the strand take-up installation, namely, on either side of one end of the battery of bushings (2) and the chopper (7), and in a direction at least partially approximately perpendicular to a plane parallel to the path of said strand.

3. The system of claim 1 or 2, **characterized in that** the conveying loop (1) is set in motion at at least one of the pulleys (3), by means of an actuator (5) adapted to make said conveying loop (1) move continuously at a controlled speed.

4. The system of claim 3, **characterized in that** the motorized pulley (3) is located substantially directly below any one of the bushings (2).

5. The system of claim 1, **characterized in that** it further includes at least one control member adapted to modify the state of said gripping member (12) between the first and second positions.

6. The system of claim 5, **characterized in that** the control member comprises at least one movable cam (14) actuated by a lever (11), said cam (14) being positioned in line with said strand, said cam being provided with a guiding surface having an operating member fastened to said gripping member (12).

7. The system of claim 1 or 2, **characterized in that** the gripping member (12) can be decoupled from the conveying loop (1).

8. The system of claims 1 to 7, **characterized in that** at least part of the conveying loop (1) is fastened to a structure articulated to the chopper (7), said structure being protected by at least one cover (15).

9. A below-bushing chopping process, which consists in forming chopped glass strands from molten glass, said molten glass having passed through orifices made in at least one bushing so as to form a plurality of filaments, said filaments being combined into at least one strand, said strand being drawn and directed after a sizing operation to at least one chopper (7) adapted to chop at least one strand into a plurality of chopped glass strands of desired length, and thus following a path between the bushing and the chopper,
wherein at least one gripping member (12) takes hold of at least one strand, said member (12) being able to occupy a first position in which it takes hold of said strand and a second position in which it releases said strand at the chopper;
the process being **characterized in that** a conveying loop (1) moves the gripping member (12) between said first position and said second position, a part of said conveying loop (1) being positioned directly below the at least one bushings (2) and in a plane approximately parallel to the output of filaments coming from the at least one bushings (2).

10. The process of claim 9, **characterized in that** the gripping member (12) takes hold of at least one strand at at least one bushing independently of the operation of the other bushings.

## Patentansprüche

1. System zur Herstellung von Glasfadensträngen, umfassend:
wenigstens eine Düse (2), die dazu bestimmt ist, durch Ziehen eine Vielzahl von Filamenten aus geschmolzenem Glas zu bilden,
ein Mittel, um die Filamente zu wenigstens einem Faden zusammenzuführen,
eine Vorrichtung zum Abscheiden einer Schlichte auf dem wenigstens einen Faden,
wenigstens eine Schneidevorrichtung (7), die ausgelegt ist, um den wenigstens einen Faden in eine Vielzahl von Glasfadensträngen zu schneiden, und
eine Einrichtung zum automatischen Aufnehmen von Fäden, um den wenigstens einen Faden zu der wenigstens einen Schneidevorrichtung (7) zu leiten, wobei die Einrichtung zum automatischen Aufnehmen von Fäden wenigstens ein Greiforgan (12) zum Erfassen des wenigstens einen Fadens umfaßt, wobei das Organ (12) eine erste Position, in der es den wenigstens einen Faden erfaßt, und eine zweite Position, in der es den wenigstens einen Faden im Bereich der Schneidevorrichtung (7) wieder losläßt, einnehmen kann,
wobei das System **dadurch gekennzeichnet ist, daß** die Einrichtung ferner eine Förderschleife (1) umfaßt, um das Greiforgan (12) zwischen der ersten Position und der zweiten Position zu bewegen, wobei die Förderschleife einen Teil aufweist, der zu der wenigstens einen Düse senkrecht und in einer Ebene positioniert ist, die zum Austritt der aus der wenigstens einen Düse kommenden Filamente im wesentlichen parallel verläuft.

2. System nach Anspruch 1, umfassend eine Gruppe von nebeneinander angeordneten Düsen (2), wobei die Förderschleife (1) sich zwischen zwei Antriebsscheiben (3, 4), die jeweils auf beiden Seiten der Einrichtung zum automatischen Aufnehmen von Fäden, nämlich auf beiden Seiten eines Endes der Gruppe von Düsen (2) bzw. der Schneidevorrichtung (7) angeordnet sind, sowie in einer Richtung erstreckt, die wenigstens teilweise zu einer zu der Strecke des Fadens parallelen Ebene im wesentlichen senkrecht verläuft.

3. System nach Anspruch 1 oder 2, **dadurch gekennzeichnet, daß** die Förderschleife (1) im Bereich von einer der beiden Scheiben (3) mit Hilfe eines Antriebs (5) in Bewegung versetzt wird, der ausgelegt ist, um der Förderschleife (1) eine permanente Bewegung mit gesteuerter Geschwindigkeit zu verleihen.

4. System nach Anspruch 3, **dadurch gekennzeichnet, daß** die motorisch angetriebene Scheibe (3) sich in der Nähe der Senkrechten von einer der Düsen (2) befindet.

5. System nach Anspruch 1, **dadurch gekennzeichnet, daß** es ferner wenigstens ein Steuerorgan umfaßt, das ausgelegt ist, um den Zustand des Greiforgans (12) zwischen der ersten Position und der zweiten Position zu ändern.

6. System nach Anspruch 5, **dadurch gekennzeichnet, daß** das Steuerorgan wenigstens einen beweglichen Nocken (14), der durch einen Hebel (11) betätigt wird, umfaßt, wobei der Nocken (14) gegenüber dem Faden angeordnet ist, wobei der Nocken mit einer Fläche zur Führung mit einem Betätigungsorgan, das mit dem Greiforgan (12) fest verbunden ist, versehen ist.

7. System nach Anspruch 1 oder 2, **dadurch gekennzeichnet, daß** das Greiforgan (12) gegenüber der Förderschleife (1) ausrückbar ist.

8. System nach einem der Ansprüche 1 bis 7, **dadurch gekennzeichnet, daß** wenigstens ein Teil der Förderschleife (1) mit einer an der Schneidevorrichtung (7) angelenkten Struktur fest verbunden ist, wobei die Struktur durch wenigstens eine Abdeckung (15) geschützt ist.

9. Verfahren zum Schneiden unter der Düse, das darin besteht, Glasfadenstränge aus geschmolzenem Glas zu bilden, wobei das geschmolzene Glas Öffnungen, die innerhalb wenigstens einer Düse ausgebildet sind, durchlaufen hat, um eine Vielzahl von Filamenten zu bilden, wobei die Filamente zu wenigstens einem Faden zusammengeführt werden, wobei der wenigstens eine Faden gezogen und nach einem Schlichtungsvorgang zu wenigstens einer Schneidevorrichtung (7) geleitet wird, die ausgelegt ist, um den wenigstens einen Faden in eine Vielzahl von Glasfadensträngen mit gewünschter Länge zu schneiden, wodurch zwischen der Düse und der Schneidevorrichtung eine Strecke ausgebildet wird,
wobei wenigstens ein Greiforgan (12) wenigstens einen Faden erfaßt, wobei das Organ (12) eine erste Position, in der es den Faden erfaßt, und eine zweite Position, in der es den Faden im Bereich der Schneidevorrichtung wieder losläßt, einnehmen kann,
wobei das Verfahren **dadurch gekennzeichnet ist, daß** eine Förderschleife (1) das Greiforgan (12) zwischen der ersten Position und der zweiten Position bewegt, wobei die Förderschleife einen Teil aufweist, der zu der wenigstens einen Düse senkrecht und in einer Ebene positioniert ist, die zum Austritt der aus der wenigstens einen Düse kommenden Filamente im wesentlichen parallel verläuft.

10. Verfahren nach Anspruch 9, **dadurch gekennzeichnet, daß** das Greiforgan (12) wenigstens einen Faden im Bereich wenigstens einer Düse unabhängig vom Betrieb der anderen Düsen erfaßt.
